Europäisches Patentamt

European Patent Office

Office européen des brevets

(11) Veröffentlichungsnummer: **0 469 263 A2**

# (12) EUROPÄISCHE PATENTANMELDUNG

(21) Anmeldenummer: **91108541.3**

(22) Anmeldetag: **24.05.91**

(51) Int. Cl.5: **H02K 21/00**

(30) Priorität: **31.07.90 DE 4024269**

(43) Veröffentlichungstag der Anmeldung:
**05.02.92 Patentblatt 92/06**

(84) Benannte Vertragsstaaten:
**BE DE ES FR GB IT**

(71) Anmelder: **Born, Rainer**
**Holzstrasse 29**
**W-4620 Castrop-Rauxel(DE)**

(72) Erfinder: **Born, Rainer**
**Holzstrasse 29**
**W-4620 Castrop-Rauxel(DE)**

(74) Vertreter: **Herrmann-Trentepohl, Werner,**
**Dipl.-Ing. et al**
**Postfach 1140 Schaeferstrasse 18**
**W-4690 Herne 1(DE)**

(54) **Generator zur Erzeugung elektrischer Energie.**

(57) Bei einem Generator zur Erzeugung elektrischer Energie, bei dem der Ständer (3) und der Läufer (2) drehbar gelagert sind und beide Teile mit gegensinniger Drehrichtung angetrieben werden, ist erfindungsgemäß vorgesehen, daß der Ständer (3) von dem angetriebenen Läufer (2) durch die magnetischen Anziehungskräfte aus der Erzeugung der elektrischen Leistung mitgenommen und der Ständer durch Leistungsnutzung abgebremst wird.

**Figur 1**

Die Erfindung betrifft einen Generator zur Erzeugung elektrischer Energie gemäß dem Oberbegriff des Anspruches 1

Bekannte Generatoren haben prinzipiell einen feststehenden Teil, den Ständer und einen drehbaren Teil, den Läufer. Bei diesen Maschinen werden durch die Drehung des Läufers aufgrund der physikalischen Regeln der magnetischen Induktion elektrische Energiepotentiale aufgebaut, die bei Nutzung in größenordnungsabhängiger Wechselwirkung magnetische Felder zwischen Ständer und Läufer erzeugen. Zur Aufrechterhaltung der Funktion werden die Anziehungskräfte dieser Magnetfelder durch die auf den Läufer wirkende mechanische Leistung überwunden. Dabei wird das Drehmoment der mechanischen Leistung auf den Ständer übertragen . Die tangential wirkenden Kraftvektoren dieser Drehmomente weisen in die Drehrichtung des Läufers.

Die Erfindung nutzt diese bei Generatoren auf dem Ständer übertragenen Drehmomente, in dem der statische Gegenpol zur Antriebsleistung durch einen dynamischen Gegenpol ersetzt wird. Dynamischer Gegenpol bedeutet Abbremsung durch Leistungsnutzung. Gemäß der Erfindung geschieht dies bei einem als bekannt vorausgesetzten Generator mit den Merkmalen des Oberbegriffes durch die Merkmale des Anspruchs 1. Weitere Merkmale der Erfindung sind Gegenstand der Unteransprüche.

Bei dem als bekannt vorausgesetzten Generator (DE-OS 37 34 835) wird die zum Läufer gegensinnige Drehung des Ständers durch einen zusätzlichen Antrieb erzwungen. Damit soll erreicht werden, daß über eine Erhöhung der Induktionsfrequenz durch die sich kumulativ auswirkenden Drehzahlen von Läufer und Ständer eine größere mechanische Leistung bei geringerer Antriebsdrehzahl in elektrische Leistung umgesetzt werden kann. Dagegen ist der Ständer des Generators nach der Erfindung nicht mechanisch mit einem Antrieb verbunden. Erfindungsgemäß wird vielmehr der Ständer von dem Läufer mitgenommen durch die bei der Erzeugung der elektrischen Leistung auftretenden magnetischen Anziehungskräfte.

Dadurch wird erreicht, daß ein Anteil der Antriebsleistung, die für die Erzeugung der elektrischen Leistung aufgewendet wird, zur weiteren Nutzung am Ständer zur Verfügung steht. Die Höhe dieses Anteils ergibt sich aus der Formel: "Antriebsleistung mal Ständerdrehzahl dividiert durch Läuferdrehzahl".

Diese Formel basiert darauf, daß bei gleicher elektrischer Leistung und gleicher Antriebsdrehzahl unabhängig von der Ständerdrehzahl immer das Antriebsdrehmoment am Ständer anliegt. Dies ist physikalisch wie folgt begründet:

Bei Änderung der Ständerdrehzahl verhält sich bei gleicher elektrischer Leistung durch den mitlaufenden Ständer der zu überwindende Kraftweg pro Ständerumdrehung umgekehrt proportional zur magnetischen Anziehungskraft aus der Erzeugung der elektrischen Leistung. Dies gilt auch von Null nach n...

Dazu ein Beispiel in absoluten Zahlen. Bei einer Änderung der Ständerdrehzahl von Null in 2000 U/min und einer Antriebsdrehzahl von 6000 U/min ändert sich der Kraftweg pro Umdrehung in 2/3 der Ausgangsbasis.

Rechnerisch ermittelbar ist dieser Wert aus der verbleibenden Drehzahldifferenz von 4000 U/min dividiert durch die Antriebsdrehzahl. Die magnetischen Anziehungskräfte ändern sich bei feststehendem Ständer, in Drehmoment ausgedrückt, z. B. bei 2 kW von 3,183 Nm bei 6000 U/min in 4,775 Nm bei 4000 U/min. Demzufolge beträgt das Gegenmoment durch den reduzierten Kraftweg pro Umdrehung bei 2000 U/min Ständerdrehzahl 2/3 von 4,775 Nm = 3,183 Nm. Letzteres ist dadurch begründete, daß die Summe aller Impulse pro Umdrehung das Drehmoment ergeben. Dies beweist,

1. daß mit dem Antriebsdrehmoment von 3,18 Nm das höhere Gegenmoment von 4,77 Nm durch den mitlaufenden Ständer überwunden werden kann und

2. daß das Drehmoment am Ständer unabhängig von der Ständerdrehzahl immer dem Antriebsdrehmoment entspricht.

Durch die oben angeführte Formel bedingt, ist die Höhe der nutzbaren Leistung am Ständer bei einer gegebenen elektrischen Leistung abhängig von der Drehzahl des Ständers. Eine Verbesserung des Nutzeffektes durch hohe Ständerdrehzahlen bei niedriger Drehzahldifferenz ist mit dem Merkmal nach Anspruch 2 möglich.

Ein wesentlicher Gesichtspunkt bei der konstruktiven Verwirklichung der Erfindung ist die durch die Ineinanderschachtelung zweier gleichsinnig drehender Teile des neuen Generators bestimmte Problematik. Eine entsprechende Anordnung der Lager bewirkt eine gleichsinnige Bewegung der inneren und äußeren Lagerringe mit einer gegensinnigen Abrollbewegung der Kugeln. Durch die relative Drehzahl zueinander, die der anzustrebenden niederen Drehzahldifferenz für den Generatorbetrieb entspricht, kumuliert sich zusätzlich der Lagerdruck aus der größeren Läuferdrehzahl. Dies bewirkt erhöhte Lagerreibung und eine Behinderung der Freigängigkeit, die durch eine größere Antriebsleistung überwunden werden muß. Durch die Merkmale nach Anspruch 3 und 4 wird eine Bewegung der äußeren Lagerringe dadurch vermieden, daß die Leistung durch einen mechanischen Abtrieb am Ständer abgegriffen wird. Weitere vorteilhafte Alternativen zur Vermeidung von erhöhten Lagerreibungen werden durch die Verwendung von Gleitlagern nach Anspruch 5 oder durch die Verwendung von Lagern mit doppeltem Käfig nach Anspruch 6 vorgeschlagen.

Mit den Merkmalen nach Anspruch 7 wird ein Generator der erfindungsgemäßen Art mit einem Generator bekannter Bauart mit ortsfestem Ständer ineinandergeschachtelt. Diese Merkmale sind besonders geeignet für Systeme, die nur auf die Erzeugung elektrischer Leistung ausgelegt sind. Sie zeichnen sich durch die Möglichkeit einer kompakten konstruktiven Verwirklichung bei Vermeidung von Problemen bei der Kraftübertragung und Lagerreibung aus.

Alle vorgenannten Aussagen sowie die daraus resultierenden Ansprüche haben auch Gültigkeit, wenn der Ständer angetrieben und der Läufer mitgenommen wird. Dabei ist es auch von untergeordneter Bedeutung, wenn die Läufer- und Ständerwicklungen in axialer Richtung hintereinander angeordnet sind. Auf alle möglichen geometrischen Alternativen konnte aus Übersichtsgründen nicht näher eingegangen werden.

Für Generatoren nach der erfindungsgemäßen Art läßt sich deren Anwendung wie folgt grob einteilen:

1. Als Getriebe in einem Antriebssystem, bei dem sich durch die Änderung des Erregerstroms mit entsprechender Leistungsentnahme das Drehmoment auf der Abtriebsseite stufenlos regeln läßt.
Vorteilhaft wirkt sich dabei aus, daß mit einer geringen Leistung, wie sie der Erregerstrom darstellt, verhältnismäßig hohe mechanische Leistungen beherrscht werden können und für die Regelung kostengünstige Niederspannungselektronik verwendet werden kann.
2. Elektrische Energieerzeugung durch Kopplung eines Elektromotors mit einem Generator der dargestellten Art und den Merkmalen nach den Ansprüchen 7 und 8 oder ohne diese Merkmale mit einem separaten Generator bekannter Bauart (ortsfester Ständer), der von dem drehbaren Ständer des erfindungsgemäßen Generators angetrieben wird.
3. Erzeugung mechanischer Leistung wie vor, jedoch mit einem kleineren Generator bekannter Bauart für den Ausgleich der Leistungsverluste.

Die Einzelheiten, weitere Merkmale und andere Vorteile der Erfindung ergeben sich aus der nachfolgenden Beschreibung und von Ausführungsformen der Erfindung, die schematisch, d.h. unter Fortlassung aller für das Verständnis der Erfindung nicht erforderlichen Einzelheiten in den Figuren der Zeichnungen wiedergegeben sind; es zeigen

Fig. 1    eine erste Ausführungsform der Erfindung,

Fig. 2    eine zweite Ausführungsform der Erfindung, bei der ein mechanischer Abtrieb am Ständer eine vorteilhafte Lageranordnung erlaubt,

Fig. 3    eine weitere Ausführungsform, bei der durch Verwendung eines Gleitlagers Lagerprobleme beherrscht werden können,

Fig. 4    eine der Figur 3 entsprechende Darstellung bei der ein Doppellager anstelle eines Gleitlagers vorgesehen ist, und

Fig. 5    eine weitere Ausführungsform, bei der ein Generator mit ortsfestem Ständer und ein Generator der erfindungsgemäßen Art ineinandergeschachtelt sind.

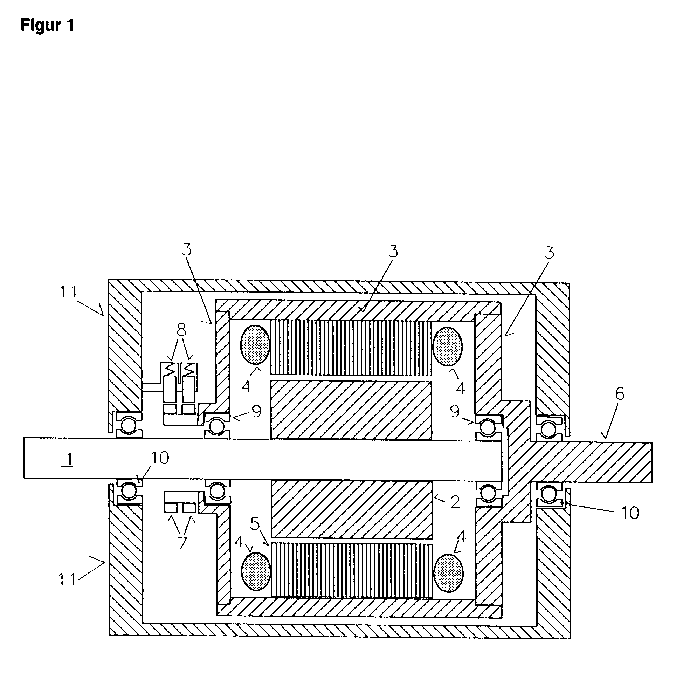

Fig. 1 stellt einen Generator mit einem Ständer (3) dar, der in der feststehenden Halterung (11) durch die Lager (9 und 10) frei drehbar ist. Als Generatortyp eigenen sich hierbei vorzugsweise Maschinen, bei denen dem Läufer über Schleifringe weder elektrische Energie zugeführt, noch von ihm abgeleitet werden muß. Die in den Spulen (4) durch die magnetische Induktion aus dem Blechpaket (5) erzeugte elektrische Leistung wird gemäß dem Ausführungsbeispiel über die Schleifringe (7) und die Bürsten abgegriffen. Die Drehzahlbegrenzung erfolgt an der Welle (6) durch eine entsprechende Leistungsnutzung.

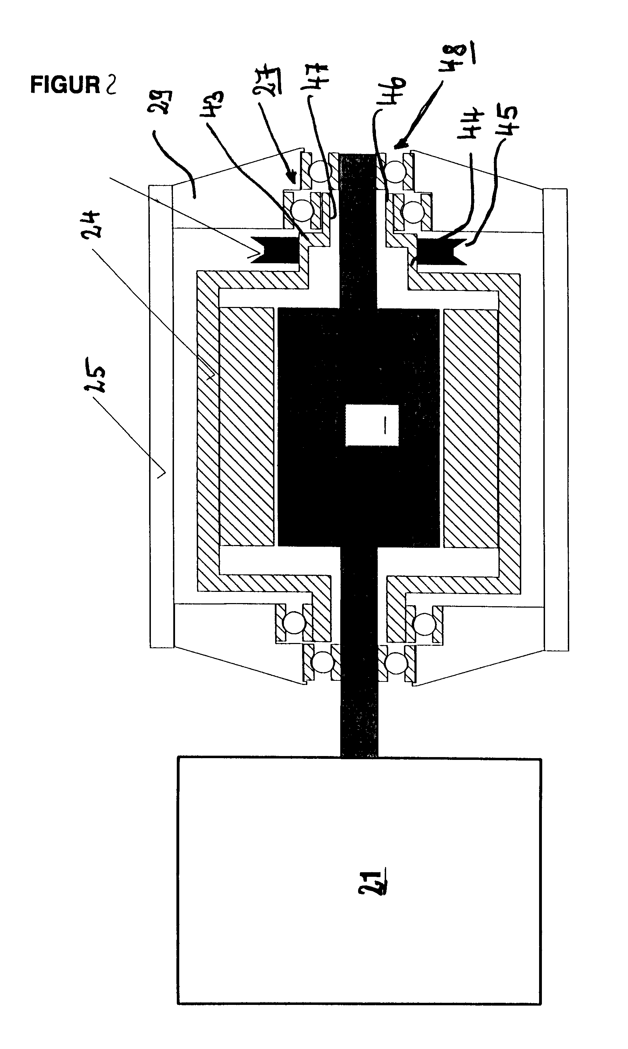

In dem Ausführungsbeispiel der Fig. 2 ist ein mechanischer Abtrieb (45) am Ständer (24) angebracht, der es ermöglicht, die Welle des Läufers (2) und die Hohlwellenenden (47, 47') des Ständers mit separaten Lagern (27, 27', 48, 48') in den Lagerschildern (29, 29') abzustützen. Dadurch werden mitlaufende Lageraußenringe und die daraus resultierenden Lagerreibungen vermieden. Der mechanische Abtrieb (45) ist der Antrieb eines nicht weiter dargestellten Zahnrad- oder Riemengetriebes. Durch die Kopplung des Lagerschildes (29') mit dem Gehäuse der Antriebsmaschine (21) kann ein Lagerschild und ein Radiallager eingespart werden.

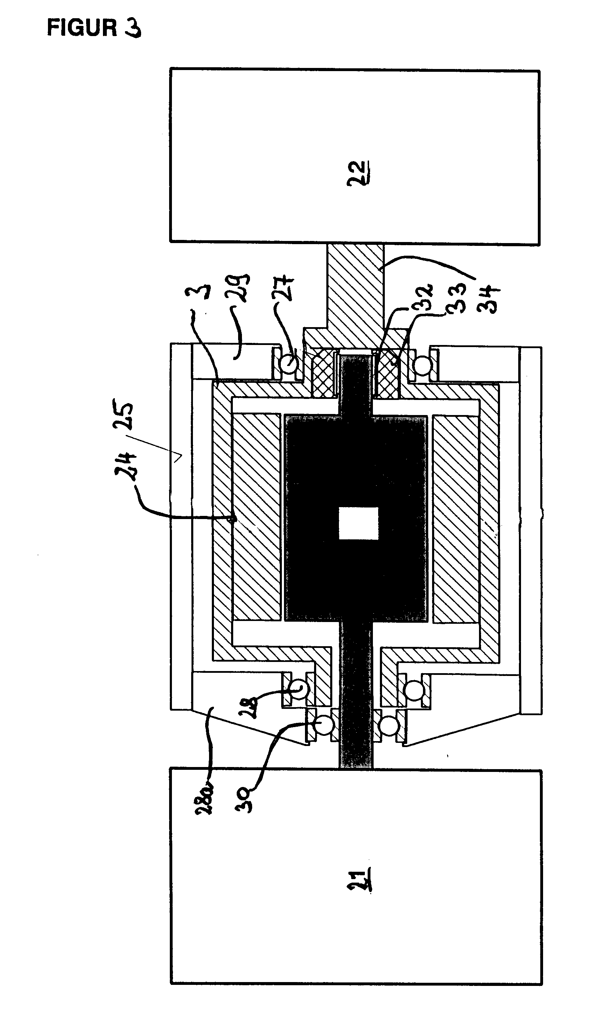

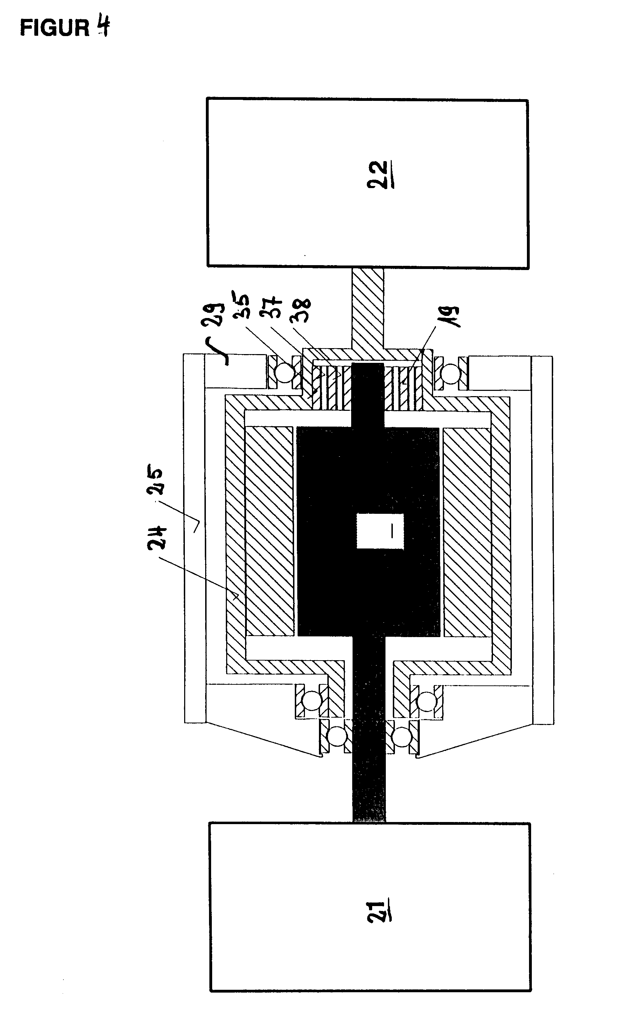

Mit den Ausführungsbeispielen nach Fig. 3 und Fig. 4 werden die Nachteile durch mitlaufende Lageraußenringe von Radiallagern bei einer Konstellation vermieden, bei der ein an dem Stator angeflanschtes Wellenende (6) durch das Lagerschild (29) koaxial nach außen geführt wird. Diese Ausführung ist für die Kraftübertragung von größeren mechanischen Leistungen sinnvoll. In Fig. 3 wird dabei die Welle des Läufers (2) gegen den Ständer (24) durch ein Gleitlager (32, 33) abgestützt. Nach dem Ausführungsbeispiel in Fig. 4 wird anstelle des Gleitlagers ein Radiallager (35) vorgesehen. Dieses Lager besteht aus zwei ineinandergeschachtelten Käfigen (37, 38) aus Kugeln, Nadeln oder Rollen, welche durch einen Zwischenring (19) getrennt sind. Der Zwischenring ermöglicht einen Differenzialausgleich zwischen den beiden Käfigen.

Bei diesen Ausführungsbeispielen können beide Lagerschilder mit den Gehäusen der Maschinen (21) und (22) gekoppelt werden.

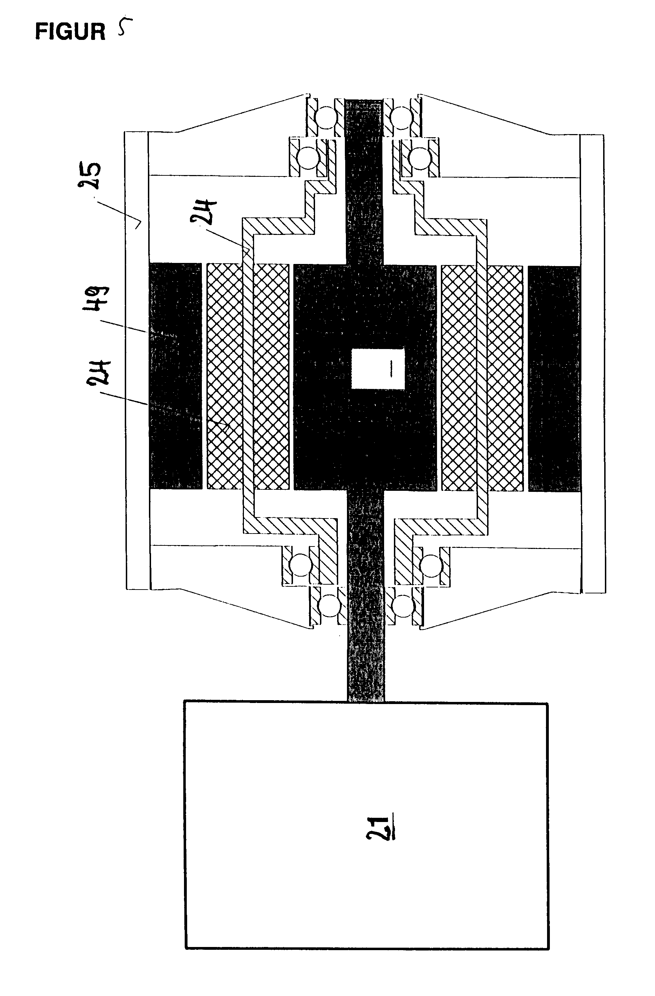

Das Ausführungsbeispiel nach Fig. 5 zeigt eine Ineinanderschachtelung eines Generators der erfindungsgemäßen Art mit dem drehbaren Ständer (24) und dem angetriebenen Läufer (2) und einem Generator bekannter Bauart mit den ortsfesten Induktionsspulen (49) am Gehäuse (25) und einem Erregermagnetsystem (50) am Ständer (24).

Der Ständer kann dabei abgebremst werden, entweder nur durch die Entnahme elektrischer Leistung oder, wie nicht weiter dargestellt, durch eine Kombination aus elektrischer Leistungsentnahme vorzugsweise für Verlustausgleiche und mechanischer Leistungsnutzung mit Vorrichtungen nach den Ansprüchen 3 bis 6. Zusätzlich besteht die Möglichkeit, das Erregermagnetsystem (Spulen oder Permanentmagnete) als eine Einheit auszubilden, die den Erregermagnetfluß ohne tangentiale Rückführung in radialer Richtung abgibt. Dazu muß der Ständer (24) aus magnetisch nichtleitendem Material hergestellt und mit Aussparungen für die Aufnahme der Erregermagnete versehen werden. Der magnetische Rückfluß für die gesamte Maschine würde dabei über das Blechpaket der Induktionsspulen (49) verlaufen. Die Differenzierung der Leistungsabgabe unter Berücksichtung der Induktionsfrequenz müßte dabei über die Größe der Induktionsspulen (49) und die des Läufers (2) erfolgen. Abhängig vom Verwendungszweck kann auch die Einzelheit (49) als Erregermagnetsystem und die Einzelheit (50) als Induktionspulen ausgebildet werden. Bei dieser Kombination bietet sich die Möglichkeit an, ein Anteil der Leistung aus den Induktionsspulen (50) gleichzurichten für die Erregerspulen (51).

**Patentansprüche**

1. Generator zur Erzeugung elektrischer Energie, bei dem der Ständer (3) und Läufer (2) drehbar gelagert sind und der Ständer (3) zusätzlich zum Läufer (2) in gegensinniger Drehung zum Läufer angetrieben wird, dadurch gekennzeichnet, daß der Ständer (3) von dem angetriebenen Läufer (2) durch die magnetischen Anziehungskräfte aus der Erzeugung der elektrischen Leistung mitgenommen und der Ständer (3) durch Leistungsnutzung abgebremst wird.

2. Generator nach Anspruch 1, dadurch gekennzeichnet, daß das Erregermagnetsystem und die Induktionsspulen des Generators so ausgelegt sind, daß die aufgrund der Antriebsleistung mögliche elektrische Leistung bei einer Drehzahldifferenz erzeugt wird, die kleiner ist als die Antriebsdrehzahl.

3. Generator nach den Ansprüchen 1 und 2, dadurch gekennzeichnet, daß die Lager (27 u. 27') der Ständerhohlwellen (47 u. 47') und die Lager (48 u. 48') des Läufers (2) in den Deckeln (29 u. 29') des Gehäuses (25) axial versetzt sind.

4. Generator nach den Ansprüchen 1 bis 3, dadurch gekennzeichnet, daß an dem Ständer (24) ein mechanischer Abtrieb (45) in der Form von Zahnrädern, Zahn- oder Keilriemenscheiben angeordnet ist.

5. Generator nach den Ansprüchen 1 und 2, dadurch gekennzeichnet, daß die Welle des Läufers (2) in einem Gleitlager (32, 33) des Ständers (24) und der Ständer (24) in einem Lager (27) eines Deckels (29) des Gehäuses (25) gelagert sind.

6. Generator nach den Ansprüchen 1 und 2, dadurch gekennzeichnet, daß die Welle des Läufers (2) in einem Lager (35) des Gehäuses (24) gelagert ist, und daß das Lager (35) aus zwei ineinandergeschachtelten Kugel-, Nadel- oder Rollenkäfigen (37, 38) besteht, die über einen freibeweglichen Zwischenring (19) abrollen.

7. Generator nach einem der vorhergehenden Ansprüche, dadurch gekennzeichnet, daß zusätzlich ein Erregermagnetsystem (50) am Ständer (24) angebracht ist, das mit ortsfesten Spulen (49) am Gehäuse (25) zusammenwirkt.

8. Generator nach einem der vorhergehenden Ansprüche, dadurch gekennzeichnet, daß die Deckel (29, 29') mit dem Gehäuse von An- und Abtriebsmaschinen gekoppelt sind und daß die äußeren Lager der Deckel zusätzlich als Lager für die externen Maschinen verwendet werden.

**Figur 1**

FIGUR 2

**FIGUR 3**

**FIGUR 4**

FIGUR 5